(19) Europäisches Patentamt
European Patent Office
Office européen des brevets

(11) Publication number: **0 058 740**
**B1**

# (12) EUROPEAN PATENT SPECIFICATION

(45) Date of publication of patent specification: **22.05.85**

(51) Int. Cl.$^4$: **C 08 L 67/06,** C 08 F 299/04

(21) Application number: **81106041.7**

(22) Date of filing: **31.07.81**

## (54) Improved polyester molding compositions and molded articles produced therefrom.

(30) Priority: **24.02.81 US 237697**

(43) Date of publication of application:
**01.09.82 Bulletin 82/35**

(45) Publication of the grant of the patent:
**22.05.85 Bulletin 85/21**

(84) Designated Contracting States:
**AT BE CH DE FR GB IT LI NL SE**

(56) References cited:
**EP-A-0 028 841**
**EP-A-0 031 434**
**US-A-3 305 514**
**US-A-3 997 627**
**US-A-4 101 604**

(73) Proprietor: **UNION CARBIDE CORPORATION**
**Old Ridgebury Road**
**Danbury Connecticut 06817 (US)**

(72) Inventor: **Atkins, Kenneth Earl**
**1311 Martha Road**
**So. Charleston West Virginia (US)**

(74) Representative: **Schmied-Kowarzik, Volker, Dr. et al**
**Patentanwälte Dr. V. Schmied-Kowarzik Dipl.-Ing. G. Dannenberg Dr. P. Weinhold Dr. D. Gudel Dipl.-Ing. S. Schubert Dr. P. Barz**
**Siegfriedstrasse 8**
**D-8000 München 40 (DE)**

**EP 0 058 740 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention pertains to improved polyester molding compositions and more particularly to those having improved surface characteristics.

A technical improvement that has made a significant contribution to commercial polyester molding technology is the use of low profile additives to reduce shrinkage during the curing reaction, and to thereby improve dimensional stability and surface smoothness. Low profile additives are thermoplastic polymers such as vinyl acetate polymers, polystyrene, acrylic polymers, and polycaprolactones. There are a number of theories that seek to explain the low profile or anti-shrinkage action of these polymers, but the one that seems to best explain the phenomenon is the following:

The low profile additive is at least partly soluble in the uncured polyester/styrene solution. As the polyester/styrene mixture crosslinks, the thermoplastic polymer becomes incompatible or less soluble and at least partly comes out of solution. This action causes a volume expansion that compensates for the shrinkage that occurs when the polyester/styrene mixture crosslinks.

The development of low-profile unsaturated polyester compounds has led to a wide acceptance of these materials by the transportation industry because of their good surface appearance, dimensional stability, physical properties, assembly consolidation and potential weight savings. However, as new applications developed standards have been raised making it desirable for even better surface appearance and the elimination of ripples and waviness that sometimes develop, particularly in relatively large appearance sensitive areas.

There is, therefore, a need to provide low profile unsaturated polyester compounds which afford improved surface appearance in the molded parts obtainable therefrom.

EP—A 0 028 841 describes a polyester molding composition comprising

(a) a polyester resin comprising the reaction product of an olefinically unsaturated dicarboxylic acid or anhydride and a polyol;

(b) an olefinically unsaturated monomer that is copolymerizable with said polyester resin;

(c) a thermoplastic polymer low-profile additive to control shrinkage; and

(d) an effective amount of a second crosslinkable vinyl monomer having a reactivity ratio with styrene of greater than 1.

The addition of component (d) in said EP—A 0 028 841 is stated to result in moldings with improved surface characteristics.

EP—A 0 031 434 — which is not prepublished — describes a composition comprising:

(a) a thermosetting polyester resin;

(b) an olefinically unsaturated monomer that is copolymerizable with polyester resins;

(c) a thermoplastic low profile additive for shrinkage control; and

(d) a thermosetting epoxy resin containing at least one 1,2-epoxy group per molecule.

The addition of component (d) in said EP—A 0 031 434 is stated to result in moldings having improved surface appearance.

It has now been found that compositions containing both a second crosslinkable vinyl monomer having a reactivity ratio with styrene of greater than 1 and a thermosetting epoxy resin containing at least one 1,2-epoxy group per molecule results in moldings having improved surface appearance as compared to those compositions containing either of said additives.

The improved composition of this invention comprises:

(a) a thermosetting polyester resin,

(b) an olefinically unsaturated monomer that is copolymerizable with the polyester resin;

(c) a thermoplastic low profile additive for shrinkage control,

(d) an effective amount of a second cross-linkable vinyl monomer having a reactivity ratio with styrene of greater than 1, and

(e) a thermosetting epoxy resin containing at least one 1,2-epoxy group per molecule.

Thermosetting polyester resins suitable for use in accordance with the invention are polyester resins that are reaction products of a dicarboxylic acid or anhydride, with a polyhydric alcohol. The dicarboxylic acids or anhydrides that are employed to produce the polyester, either singly or in combination, must include those that contain olefinic unsaturation, preferably wherein the olefinic unsaturation is alpha, beta- to at least one of the carboxylic acid groups. Such acids include maleic acid or anhydride, fumaric acid, methylmaleic acid, and itaconic acid. Maleic acid or anhydride and fumaric acid are the most widely used commercially.

In addition to the olefinically unsaturated acid or anhydride, saturated and/or aromatic dicarboxylic acids or anhydrides can also be employed in producing the polyester. Such acids include phthalic acid or anhydride, terephthalic acid, hexahydrophthalic acid or anhydride, adipic acid, isophthalic acid, and "dimer" acid (i.e., dimerized fatty acids).

A polyol is also employed to produce the polyester. Such polyols include ethylene glycol, diethylene glycol, propylene glycol, dipropylene glycol, butylene glycols, neopentyl glycol, glycerol and 1,1,1-trimethylolpropane. Generally not more than 20 mole percent of the polyol will be a triol, with the remainder being one or more diols.

As is known in the art, polyesters that are employed in thickening molding compositions must contain

residual acidity in order to enter into the thickening reaction. The nature and production of the polyesters used in such applications, such as, dicyclopentadiene modified resins are known in the art and are described in US—A—3,933,757 and U.S.—A—3,883,612.

Vinyl ester resins that have been advantageously employed in both bulk molding compounds (BMC) and sheet molding compounds (SMC) are resins wherein the secondary hydroxyl group formed by the interaction of an expoxide group with a carboxylic acid group has been reacted with a dicarboxylic acid anhydride to produce pendant carboxylic acid groups. A variety of saturated and unsaturated anhydrides similar to those described as useful in preparing polyester resins may be used in proportions of at least 0.1 mole of anhydride per equivalent of hydroxyl group up to an amount sufficient to react with each hydroxyl.

Thermosetting resins that are classified herein as vinyl ester resins, which contain the characteristic linkages and terminal, polymerizable unsaturated groups, are fully disclosed in US—A—3,887,515 to Pennington et al along with the preparation of such resins and further description of these well known resins is unnecessary herein.

The curable compositions of the invention also contain a monomer that contains ethylenic unsaturation, and which is copolymerizable with the polyester and terminally unsaturated vinyl ester resins. Styrene is the preferred monomer in commercial practice today, although others can be used.

The said monomer is also employed in the resin composition for the purpose of dissolving the thermosetting resin (which is a solid at ambient temperatures, i.e., about 20°—25°C.) to ensure that the resin composition is a fluid. Enough monomer is employed so that the thickness or viscosity of the fluid is such that the fluid can be processed conveniently. Excessive amounts of the monomer are normally to be avoided, because such excess can have an adverse effect on properties. For instance, too much of the monomer may tend to cause embrittlement of the cured polyester. Within these guidelines, effective proportions of the monomer are normally found within the range of from 25 to about 70, and preferably 40 to 55, weight percent, based on weight of thermosetting alkyl plus monomer, plus thermoplastic additive.

When desired a thickening agent can also be employed in the compositions of the invention. Such materials are known in the art, and include the oxides and hydroxides of the metals of Group I, II and III of the Periodic Table. Illustrative examples of thickening agents include magnesium oxide, calcium oxide, calcium hydroxide, zinc oxide, barium oxide or magnesium hydroxide, including mixtures of the same. Thickening agents are normally employed in proportions of from 0.1 to 6 weight percent, based upon the weight of polyester resin, plus monomer, plus low profile additive.

Alternatively a dual thickening system may be employed wherein, for example, a metalic oxide or hydroxide and polyisocyanate in amounts of polyisocyanate sufficient to react with at least thirty percent of the hydroxyl groups but not more than one hundred and five percent of the hydroxyl groups present and an amount of metallic oxide or hydroxide sufficient to react with at least thirty percent of the carboxyl groups but not more than seventy-five percent of the carboxyl groups present. Reference is made to BE—A—849,135 for a description of such dual thickening systems.

An essential component of the compositions of the invention are thermoplastic low profile additives. In one aspect, the low profile additives that may be employed in the invention are thermoplastic polymers of vinyl acetate, saturated thermoplastic polyesters, and mixtures of the same. In another aspect of the invention, the low profile additive that may be employed are thermoplastic polyalkyl methacrylate polymers.

Suitable thermoplastic vinyl acetate polymer low profile additives are poly(vinyl acetates) homopolymers and thermoplastic copolymers containing at least 50 weight percent vinyl acetate. Such polymers include, for example vinyl acetate homopolymer; carboxylated vinyl acetate polymers including copolymers of vinyl acetate and ethylenically unsaturated carboxylic acids, such as acrylic acid, methacrylic acid, crotonic acid, maleic acid, fumaric acid, itaconic acid or anhydrides such as maleic anhydride; vinyl acetate/vinyl chloridem/maleic acid terpolymer. Reference is made to US—A—3,718,714 and GB—A—1,361,841 for descriptions of some of the suitable vinyl acetate polymer low profile additives.

The useful vinyl acetate polymer low profile additives ordinarily have molecular weights within the range of from 10,000 to 250,000, and preferably from 25,000 to 175,000. They are usually employed in proportions of from 5 to 25, and preferably from 9 to 16, weight per cent, based on weight of polyester plus thermoplastic, plus monomer.

Suitable thermoplastic saturated polyester low profile additives are, in general, low molecular weight saturated polymers of polymerizable linear and/or cyclic esters and carboxylated saturated polymers of said polymerizable esters having at least one carboxyl group per molecule.

Polymers of linear and/or cyclic esters, including carboxylated polymers having an average of at least one carboxyl group per molecule which may be used in accordance with the present invention are those which possess a reduced viscosity of at least 0.1, and preferably from 0.15 to 15 and higher. The preferred polymers of cyclic esters have a reduced viscosity of 0.2 to 10.

Suitable polymers are further characterized by the following basic recurring structural Unit I

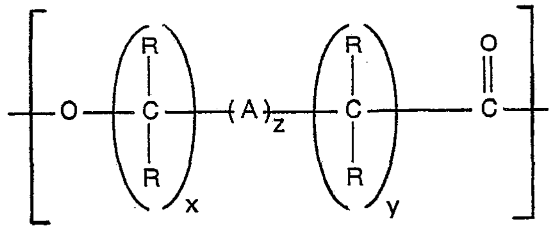

wherein each R, which can be the same or different, is hydrogen, halogen, i.e. chlorine, bromine, iodine, or fluorine, or a monovalent hydrocarbon radical generally containing a maximum of 12 carbon atoms, and preferably containing a maximum of eight carbon atoms. A is an oxy group; x is an integer having a value of 1 to 4 inclusive, y is an integer having a value of 1 to 4 inclusive, z is an integer having a value of 0 or 1, with the proviso that (a) the sum of x+y+z is 4 to 6 inclusive and (b) the total number of R variables which are substituents other than hydrogen does not exceed 2.

Illustrative of suitable monovalent hydrocarbon radicals for R are the following: alkyl radicals such as methyl, ethyl, propyl, isopropyl, n-butyl, sec-butyl, t-butyl, i-butyl, n-hexyl, 2-ethylhexyl, n-dodecyl, chloroethyl, chloropropyl; alkoxy radicals (alkyl defined as above) such as methoxy, ethoxy, n-propoxy, n-hexoxy or n-dodecoxy; aryl radicals such as phenyl, benzyl ethyl phenyl, ethyl, n-propylphenyl, n-butylphenyl; aryloxy radicals such as phenoxy, n-propylphenoxy or n-butylphenoxy; cycloaliphatic radicals such as cyclopentyl or cyclohexyl.

In one embodiment, desirable polymers of cyclic esters are characterized by both basic recurring structural Unit I supra and basic recurring structural Unit II, as are obtained from a mixture containing a cyclic ester and a cyclic monomer such as ethylene oxide or propylene oxide

Unit II 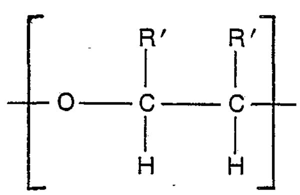

wherein each R′, is as defined for R of Unit I, or in which the two R′ variables together with the ethylene moiety of the oxyethylene chain of Unit II form a saturated cycloaliphatic hydrocarbon ring having from four to eight carbon atoms inclusive. It is preferred that recurring Unit II contains from two to twelve carbon atoms inclusive. The interconnection of Unit I and Unit II does not involve or result in the direct bonding of two oxy groups i.e., —O—O—.

Particularly preferred polymers of cyclic esters are those which are characterized by the oxypentamethylenecarbonyl chain as seen in basic recurring structural Unit III

Unit III 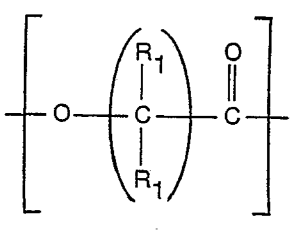

wherein each $R_1$ is hydrogen or lower alkyl, that is alkyl having a maximum of 4 carbon atoms, with the proviso that no more than three $R_1$ variables are substituents other than hydrogen.

Thermoplastic saturated polymers of linear and/or cyclic esters are well known and the carboxylated saturated esters are well known and such thermoplastic saturated polymers, and particularly polymers prepared from epsilon-caprolactones, have been advantageously employed as low profile additives. Reference, for example, is made to US—A—4,549,586 and 3,668,178 for descriptions of thermoplastic saturated polyester low profile additives and carboxylated thermoplastic saturated polyester low profile additives prepared from cyclic esters.

Also included are polyesters based on diacids, such as adipic acid, and diols, such as 1,6-hexanediol. These polyesters are described in, for example, US—A—3,909,483; 3,994,853; 3,736,278; and 3,929,868.

The thermoplastic saturated polyester low profile additives may usually be employed in the compositions of the invention in proportions similar to those of thermoplastic vinyl acetate polymers, i.e., in proportions from 5 to 25 weight percent, and preferably from 10 to 20 weight percent, based on the weight of polyester, plus thermoplastic polymer, plus monomer.

Also suitable in certain aspects of the invention are thermoplastic polyalkyl acrylate or methacrylate low profile additives including, for example, homopolymers of methyl methacrylate, ethyl methacrylate, butyl methacrylate, methyl acrylate, ethyl acrylate; copolymers of methyl methacrylate and low alkyl esters of acrylic and methacrylic acids, and copolymers of methyl methacrylate with minor amounts of one or more of the following: lauroyl methacrylate, isobornyl methacrylate, acrylamide, hydroxyethyl methacrylate, styrene, 2-ethylhexyl acrylate, acrylonitrile, methacrylic acid, polystyrene, styrene copolymers, such as, styrene/butadiene copolymers, cellulose acetate butyrate or alkylene oxide polymers.

Molecular weight of the alkyl acrylate or methacrylate polymers useful in the invention may vary over a wide range, from 10,000 to 1,000,000, and preferably from 25,000 to 500,000.

The thermoplastic polymer should be present in amounts ranging from 1 to 25 percent by weight, based on the weight of polyester, plus low profile additive, plus monomer, and preferably from 5 to 20 percent by weight.

An optional component of the compositions of the invention is a viscosity reducing agent. In one aspect the invention employs, generally in combination with thermoplastic vinyl acetate polymer and thermoplastic saturated polyester low profile additives, a viscosity reducing agent which is an aliphatic monocarboxylic acid having at least 6 carbon atoms.

The aliphatic monocarboxylic acid employed usually has at least 6 carbon atoms in the chain, and is frequently a saturated or unsaturated fatty acid having from 6 to 24 or more carbon atoms in the chain. Such carboxylic acids may be caproic, caprylic, capric, lauric, myristic, palmitic, palmitoleic, stearic, oleic, linoleic, or linolenic ($C_{18}$), and the acids may be either straight chain or branched chain. Products in which mixtures of acids of the foregoing kind occur, such as tall oil acid, may be used.

The viscosity reducing agent can be present in amounts ranging from 0.4 to 6 weight percent, and preferably from 1 to 4 weight percent, based on the combined weight of thermosetting resin, copolymerizable monomer, and low profile additive.

The epoxy compounds of this invention can be based on aliphatic, cycloaliphatic or aromatic backbones. Thus for example are included the bisphenol A based epoxy resins.

One class of preferred thermosetting epoxy resins can be represented by the formula:

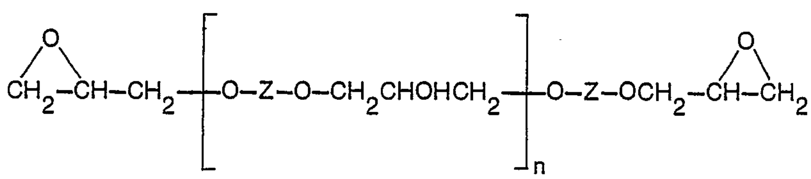

wherein n is an integer representing the number of repeating units and has a value of 0 to 10 and Z is an arylene radical having 6 to 20 carbons. The preferred arylene radical is:

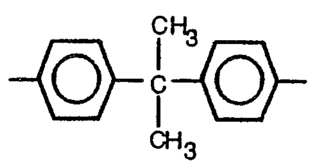

Still another preferred class of thermosetting epoxy resins are the 1,2-cycloaliphatic diepoxides. They are exemplified by the following:

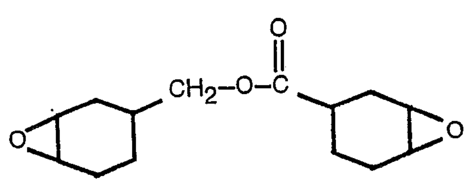

3,4-epoxycyclohexylmethyl 3,4-epoxycyclohexane carboxylate

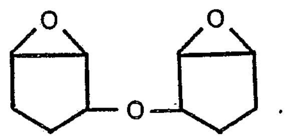

bis(2,3-epoxycyclopentyl)ether

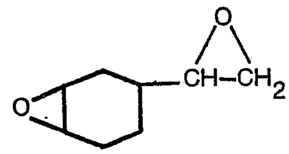

vinyl cyclohexene dioxide and

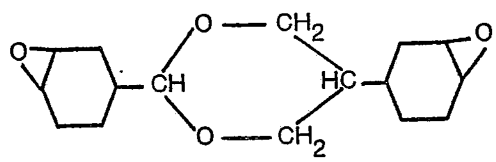

2-(3,4-epoxycyclohexyl-5,5-spiro)-(3,4 epoxy)cyclohexane-m-dioxane, and

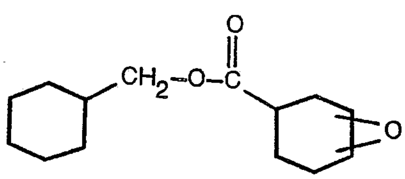

and

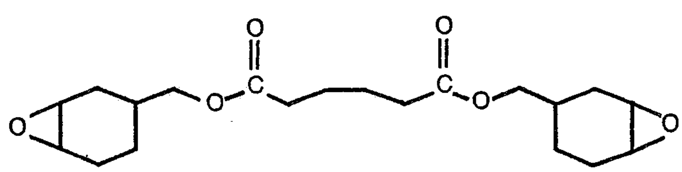

bis(3,4-epoxy-cyclohexylmethyl)-adipate.

A general description of the preparation of thermosetting epoxy resins is presented in the Encyclopedia of Polymer Science and Technology, pp. 209—216, Vol. 6, Interscience Publishers, N.Y.C. 1967.

A representative example of an aliphatic epoxy compound is epoxidized polybutadiene.

Also included herein are epoxidized oils, such as epoxidized soybean oil, tung oil or linseed oil as well as octyl epoxytallate or epoxidized pentaerythritol tetratallate.

While the amount of epoxy compound used in the practice of this invention is not narrowly critical, it is preferred to use 1 to 25 parts per hundred parts of polyester resin plus unsaturated monomer plus low profile additive and even more preferred about 2 to 10 parts per hundred.

The secondary crosslinkable monomer suitable for use in the present invention has a reactivity ratio with styrene of greater than 1, preferably greater than 5, and most preferably greater than 20.

Measuring the reactivity ratios of monomers is well known in the art as described, for example, in F. W. Billmeyer, Jr., *Textbook of Polymer Science,* Wiley-Interscience, pages 329—331.

The monomer reactivity ratios $r_1$ and $r_2$ are the ratios of the rate constant for a given radical adding its own monomer to that for its adding the other monomer. Thus $r_1>1$ means that the radical $M_1$ prefers to add $M_1$; $r_1<1$ means that it prefers to add $M_2$. In the system styrene ($M_1$)-methyl methacrylate ($M_2$), for example, $r_1 = 0.52$ and $r_2 = 0.46$; each radical adds the other monomer about twice as fast as its own. Thus, methyl methacrylate is unsatisfactory in the molding compositions of this invention.

The following Table lists representative styrene-monomer reactivity ratios.

| Monomer-1 | Monomer-2 | $r_1$ | $r_2$ |
|---|---|---|---|
| Styrene | Diethylfumarate* | 0.30 | 0.07 |
| | Diethylfumarate* | 0.400 | 0.0905 |
| | Methyl Methacrylate* | 0.52 | 0.46 |
| | Methyl Methacrylate* | .59 | 0.536 |
| | Vinyl Acetate | 55 | 0.01 |
| | Vinyl Methyl Ether | 100 | 0.01 |
| | Vinyl Ether Ether | 90 | 0 |
| | Vinyl Nonanoate | 49.5 | 0.01 |
| | Vinyl Octadecanate | 68 | 0.01 |
| | Vinyl Stearate | 68 | 0.01 |
| | Vinyl Undecanoate | 29 | 0.02 |
| | Allyl Acetate | 90 | 0.00 |
| | Diallylphthalate | 328 | 0.057 |
| | Diethyl maleate | 6.52 | 0.005 |
| | Ethyl 2-Ethoxyacrylate | 23.5 | ~0 |
| | Vinyl trimethoxysilane | 22 | 0 |

Other monomers suitable for use in this invention include vinyl norbornene, vinyl stearate, butyl vinyl ether, diallyl phthalate, octene-1, octene-2, vinyl cyclohexene, bicyclononadiene, dicyclopentadiene, and the following:

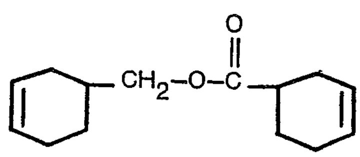

The polyester molding composition may also contain or or more of the known types of conventional additives, which are employed for their known purposes in the usual amounts. The following are illustrative of such additives:

1. Polymerization initiators such as *t*-butyl hydroperoxide, *t*-butyl perbenzoate, benzoyl peroxide, cumene hydroperoxide, methyl ethyl ketone peroxide, and others known to the art. The polymerization initiator is employed in a catalytically effective amount, such as from 0.3 to 2 to 3 weight percent, based on the weight of the polyester plus monomer plus low profile additive;

2. Fillers such as clay, hydrated alumina, silica, calcium carbonate and others known to the art;

3. Reinforcing fillers such as glass fibers or fabrics, asbestos fibers or fabrics, various organic fibers or fabrics such as those made of polypropylene, acrylonitrile/vinyl chloride copolymer, and others known to the art; and

4. Mold release agents or lubricants, such as zinc stearate, calcium stearate, and others known to the art.

5. Rubbers or elastomers such as (a): homopolymers or copolymers of conjugated dienes having a weight average molecular weight of 30,000 to 400,000 or higher as described in US—A—4,020,036. The conjugated dienes contain from 4—12 carbon atoms per molecule such as 1,3-butadiene or isoprene; (b) epihalohydrin homopolymers, a copolymer of two or more epihalohydrin monomer, or a copolymer of an epihalohydrin monomer(s) with an oxide monomer(s) having a number average molecular weight (Mn) which varies from about 800 to about 50,000 as described in US—A—4,101,604; (c) chloroprene polymers

including homopolymers of chloroprene and copolymers of chloroprene with sulfur and/or with at least one copolymerizable organic monomer wherein chloroprene constitutes at least 50 weight percent of the organic monomer make-up of the copolymer as described in 4,161,471; (d) hydrocarbon polymers including ethylene/propylene dipolymers and copolymers of ethylene/propylene and at least one nonconjugated diene, such as ethylene/propylene/hexadiene terpolymers and ethylene/propylene/1,4-hexadiene/norbornadiene, as described in US—A—4,161,471; (e) conjugated diene butyl elastomers, such as copolymers consisting of from 85 to 99.5% by weight of a $C_4$—$C_7$ isolefin combined with 15 to 0.5% by weight of a conjugated multi-olefin having 4 to 14 carbon atoms, copolymers of isobutylene and isoprene where a major portion of the isoprene units combined therein have conjugated diene unsaturation as described in US—A—4,160,759.

Once formulated, the compositions can be molded into thermoset articles of desired shape, particularly thermoset articles such as automobile fenders or dash-boards. The actual molding cycle will, of course, depend upon the exact composition being molded as well as upon the nature of a particular cured product desired. Suitable moldings cycles are conducted at temperatures of the order of about 100°C to about 182°C for periods of time ranging from about 0.5 minutes to about 5 minutes.

The shrinkage data molding conditions for making 30.5 × 30.5 × 0.3cm (12″ × 12″ × 1/8″) plaques were two minutes at 148°C. and 55 bar (800 psi) unless otherwise.

The molding viscosities were measured on paste samples containing all of the ingredients except the fiberglass using a Brookfield HBT 5× Viscometer® TF spindle at 5 rpm.

## EXPERIMENTAL SECTION

### General Procedure for Preparation of Sheet Molding Compound (SMC) Formulation

All the liquid components were weighed individually into a 9 liter (5 gallon) open top container placed on a Toledo® balance. The contents of the container were then mixed (in a hood) with a high speed Cowles® type dissolver. The agitator was started at a slow speed, then increased to medium speed to completely mix the liquids over a period of 2—3 minutes. The mold release agent, if one is desired, was next added to the liquids from an ice cream carton and mixed with until completely dispersed. The filler was next added gradually from a tared container until a consistent paste was obtained and the contents were then further mixed to a minimum temperature of 32°C (90°F.). The thickener was next mixed into the paste over a period of 2—3 minutes, the mixer was stopped and ~175 grams of the paste was removed from the container and transferred to a wide-mouthed 120 ml (4 oz.) bottle. The paste sample was stored in the capped bottle at room temperature and the viscosity measured periodically using a Model HBT 5× Brookfield Synchro-Lectric Viscometer® on a Helipath Stand®.

The balance of the paste is next added to the doctor boxes on the SMC machine where it is further combined with fiber glass [~2.5 cm (~1″) fibers]. The sheet molding compound (SMC) is then allowed to mature to holding viscosity and then molded into the desired article.

*Hood Scoops*

Hood Scoops designed like miniature automobile hoods and containing a number of ribs and bosses of varying sizes was used to determine "sink", surface smoothness and overall moldability of sheet molding compound formulations containing surface improvers. The hood scoop contains a large triangular boss [~3.8 cm (1,9″) base, ~9.6 cm (3.8″) high] and 3 circular bosses [~1 cm, ~2.3 cm, ~3.5 cm (~0.4″, ~0.9″, ~1.4″) diameter]. It also contains a number of ribs of varying thickness and with different lead in radii.

Visual observations of these hood scoops as molded and after painting with a gloss black paint enables to compare "sink" over the ribs and bosses, craze cracking, surface smoothness, glass pattern, laking and overall moldability. The hood scoop mold is installed in a 200 Ton (1 Ton = 8.897 × $10^3$N) Lawton hydraulic press. The molds contain ejector pins for release of the molded part and are heated with circulating oil. The male core is installed in the bottom of the press and the female cavity at the top. Temperatures of the two molds are controlled separately. Pressure of the press can be varied up to 200 Ton (1 Ton = 8.897 × $10^3$N) with variable time cycles so that the same part can be molded at several pressures. The speed at which the press closes can also be varied as well as the cure cycle for the molded part. All of these were varied during the molding of SMC formulations containing the surface improvers. Placement of the change pattern on the male core mold was also varied. The molded hood scoop was allowed to cool and was then evaluated.

## DESCRIPTION OF THE MATERIALS

BAKELITE® LP—40A A product of Union Carbide Corporation which is a copolymer of vinyl acetate and acrylic acid (40 weight percent) dissolved in styrene (60 weight percent).

*Snowflake®* A calcium carbonate filler sold by *Thompson-Weimann, Inc.* having a mean particle size of 5 µm.

*Modifier M.* A 33 weight percent dispersion of magnesium oxide in an unsaturated polyester carrier vehicle sold by USS Chemicals/Polyester Unit.

*PDO.* A 50% dispersion of tert-butylperoctoate in dioctyl phthalate sold by the *Lucidol Division* of Pennwalt Corp.

*BAKELITE® VR—3* A mixture of commercial fatty acids sold by Union Carbide Corporation.

*USS—13031.* A highly reactive unsaturated polyester resin believed to be ortho-phthalic anhydride modified containing approximately 40 weight percent of styrene sold by USS Chemicals Polyester Unit. 70 parts per million of parabenzoquinone, based on the polyester were added.

*OCF—951.* A fiberglass roving chopped to desired length on the sheet molding compound machine and sold by Owens Corning Fiberglass Corp.

ERL–4221

| | Epoxide No. (Eq. Wt.) | Functionality |
|---|---|---|
| 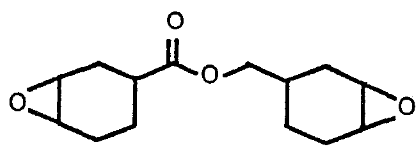 | 131–143 | 2 |

TABLE I

| | SMC Formulations | | | |
|---|---|---|---|---|
| Formulation No. | 1 | 2 | 3 | 4 |
| USS–13031 | 65 | 65 | 65 | 65 |
| Bakelite® LP–40A | 35 | 35 | 35 | 35 |
| Vinyl acetate | – | 3 | 3 | 2 |
| ERL–4221 | – | – | 3 | 2 |
| Snowflake | 150 | 150 | 159 | 155 |
| t-butyl perbenzoate | 0.7 | 0.7 | 0.7 | 0.7 |
| t-butyl peroctoate (50%) | 0.6 | 0.6 | 0.6 | 0.6 |
| Zinc stearate | 2 | 2 | 2 | 2 |
| Bakelite Viscosity reducer VR–3 | 2 | 2 | 2 | 2 |
| Modifier M | 2.7 | 2.7 | 2.7 | 2.7 |
| Fiberglass [2.5 cm (1 inch)] wt. % | ← | | 27 – 28 | → |
| Molding Viscosity, MM cps (Brookfield HBT–5X Viscometer T–F/5 rpm) | 25.6 | 24.0 | 25.6 | 22.8 |

Two techniques were used in preparing the formulation for molding. In one technique the polyethylene film which covered the SMC formulations was removed and the charge immediately put into the mold and the press closed for molding. In the second technique the polyethylene film was removed from the charge

and it was allowed to stand uncovered at room temperature (about 25°C) for thirty minutes (weathering) and then charged to the mold. This type of weathering often occurs in molding plants when charges are prepared for part productions.

The SMC formulations were then molded into the hood scoops, described *supra.* About 800 grams of the SMC formulations were molded at about 69 bar (1000 psi) with the cavity temperature about 152°C (305°F) and a core temperature of about 146°C (295°F). The cure time was about two minutes.

The molded parts were painted with a high gloss automotive lacquer, baked and then evaluated visually for surface smoothness and appearance.

The surface evaluations for the moldings made from charges immediately introduced to the mold were evaluated and are listed as from best to worst in Table II.

TABLE II

| Formulation No. | Vinyl acetate (parts) | Epoxide (parts) | |
|---|---|---|---|
| 4 | 2 | 2 | Best |
| 3 | 3 | 3 | |
| 2 | 3 | – | |
| 1 | – | – | Worst |

The surface evaluations of the moldings were made from charges which were weathered were compared with the surface of moldings made with unweathered material.

The results are shown in Table III.

TABLE III

| Formulation No. | Vinyl acetate (parts) | Epoxide (parts) | Comments |
|---|---|---|---|
| 1 | – | – | Surface much worse after weathering |
| 2 | 3 | – | Surface worse after weathering but not as bad as formulation 1 |
| 3 | 3 | 3 | Surface somewhat better after weathering |
| 4 | 2 | 2 | Surface slightly worse after weathering |

**Claims**

1. An improved low profile additive composition comprising:
(a) a thermosetting polyester resin,
(b) an olefinically unsaturated monomer that is copolymerizable with the polyester resin,
(c) a thermoplastic low profile additive for shrinkage control,

(d) an effective amount of a second crosslinkable vinyl monomer having a reactivity ratio with styrene of greater than 1, and

(e) a thermosetting epoxy resin containing at least one 1,2-epoxy group per molecule.

2. Composition claimed in claim 1 wherein the second vinyl monomer has a reactivity ratio with styrene of greater than 5, preferably greater than 20.

3. Composition claimed in claim 1 or 2 wherein the second vinyl monomer is vinyl acetate, vinyl stearate, vinyl norbornene, dicyclopentadiene, butyl vinyl ether, diallyl phthalate, or

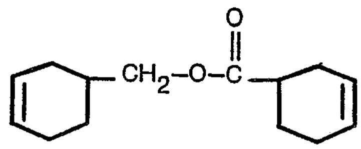

4. Composition claimed in any one of the preceding claims wherein the epoxy compound has the structure

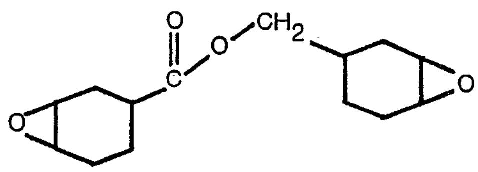

(3,4-epoxycyclohexylmethyl 3,4-epoxycyclohexane carboxylate),

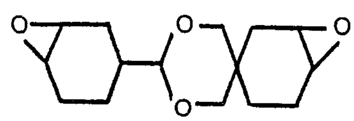

(3-(3,4-epoxycyclohexane)-8,9-epoxy-2,4-dioxaspiro[5.5]-undecane),

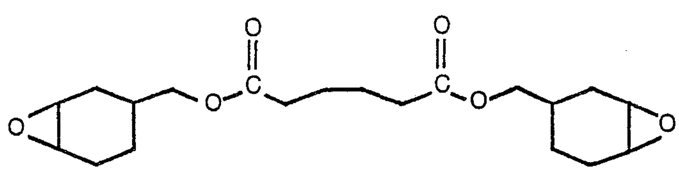

(bis(3,4-epoxy-cyclohexylmethyl)-adipate),

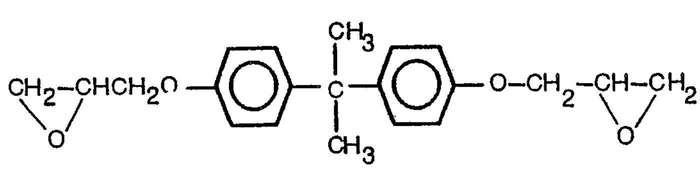

or

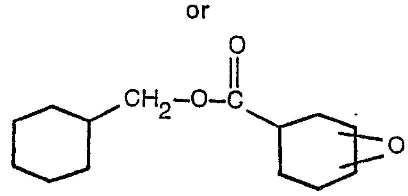

5. Composition claimed in any one of claims 1 to 3 wherein the epoxy compound is epoxidized pentaerythritol tetratallate, epoxidized soy bean oil, octyl epoxytallate or epoxidized linseed oil.

6. Composition claimed in any one of the preceding claims containing a thickening amount of a chemically active thickening agent, preferably magnesium oxide.

7. Composition claimed in any one of the preceding claims wherein the low profile additive is a polyvinyl acetate preferably a carboxylated polyvinyl acetate.

8. Composition claimed in any one of the preceding claims containing a reinforcing filler, preferably a glass fiber.

9. Composition claimed in any one of the preceding claims containing a rubber or elastomer.

10. A molded article produced from the composition of claims 1 to 9.

**Patentansprüche**

1. Polyesterformmasse mit verbesserter Maßbeständigkeit, enthaltend:

(a) ein wärmehärtendes Polyesterharz,

(b) ein olefinisch ungesättigtes Monomer, das mit dem Polyesterharz copolymerisierbar ist,

(c) einen thermoplastischen Maßbeständigkeitszusatz zur Kontrolle der Schrumpfung,

(d) eine wirksame Menge eines zweiten vernetzbaren Vinylmonomers mit einem Reaktivitätsverhältnis mit Styrol größer als 1 und

(e) ein wärmehärtendes Epoxyharz, das mindestens eine 1,2-Epoxygruppe pro Molekül enthält.

2. Masse nach Anspruch 1, in welcher das zweite Vinylmonomer ein Reaktivitätsverhältnis mit Styrol größer als 5, vorzugsweise größer als 20, besitzt.

3. Masse nach Anspruch 1 oder 2, in welcher das zweite Vinylmonomer Vinylacetat, Vinylstearat, Vinylnorbornen, Dicyclopentadien, Butylvinylether, Diallylphthalat oder

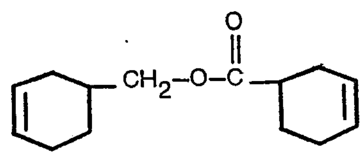

ist.

4. Masse nach einem der vorhergehenden Ansprüche, in welcher die Epoxyverbindung die Struktur

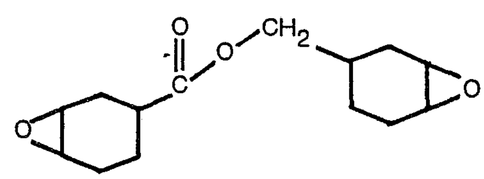

(3,4-Epoxycyclohexylmethyl-3,4-epoxycyclohexan-carboxylat),

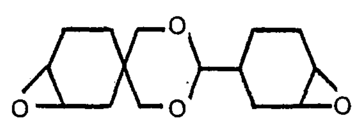

(3-(3,4-Epoxycyclohexan)-8,9-epoxy-2,4-dioxaspiro[5.5]-undecan),

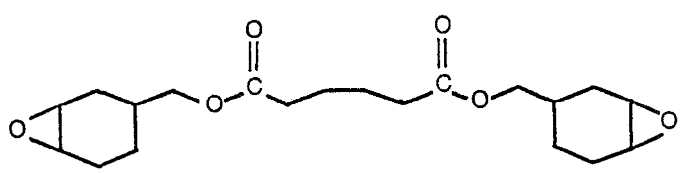

(Bis-(3,4-epoxycyclohexylmethyl)-adipat),

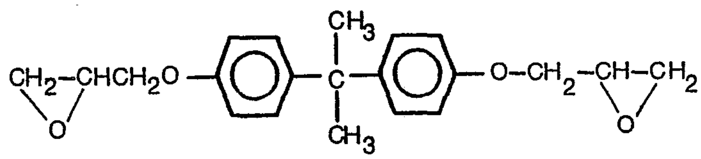

oder

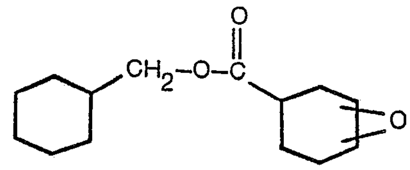

ist.

5. Masse nach einem der Ansprüche 1 bis 3, in welcher die Epoxyverbindung epoxidiertes Pentaerythrittetratallat, epoxidiertes Sojabohnenöl, Octylepoxytallat oder epoxidiertes Leinsamenöl ist.

6. Masse nach einem der vorhergehenden Ansprüche, die eine dickende Menge eines chemisch aktiven Dickungsmittels, vorzugsweise Magnesiumoxid, enthält.

7. Masse nach einem der vorhergehenden Ansprüche, in welcher das Maßbeständigkeitszusatz ein Polyvinylacetat, vorzugsweise ein carboxyliertes Polyvinylacetat, ist.

8. Masse nach einem der vorhergehenden Ansprüche, die einen verstärkenden Füller, vorzugsweise eine Glasfaser, enthält.

9. Masse nach einem der vorhergehenden Ansprüche, die einen Kautschuk oder ein Elastomer enthält.

10. Geformter Gegenstand, hergestellt aus der Masse der Ansprüche 1 bis 9.

**Revendications**

1. Composition perfectionnée d'additif bas profil, comprenant:

(a) une résine polyester thermodurcissable,

(b) un monomère à insaturation oléfinique qui peut être copolymérisé avec la résine polyester,

(c) un additif thermoplastique bas profil pour inhiber le retrait,

(d) une quantité efficace d'un second monomère vinylique réticulable ayant un rapport de réactivité avec le styrène supérieur à 1, et

(e) une résine époxy thermodurcissable contenant au moins un groupe 1,2-époxy par molécule.

2. Composition suivant la revendication 1, dans laquelle le second monomère vinylique a un rapport de réactivité avec le styrène supérieur à 5, de préférence supérieur à 20.

3. Composition suivant la revendication 1 ou 2, dans laquelle le second monomère vinylique est l'acétate de vinyle, le stéarate de vinyle, le vinylnorbornène, le dicyclopentadiène, l'éther de butyle et de vinyle, le phtalate de diallyle, ou

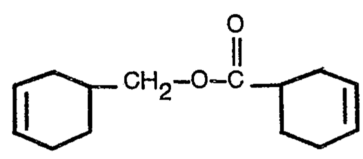

4. Composition suivant l'une quelconque des revendications précédentes, dans laquelle le composé époxy répond à la formule

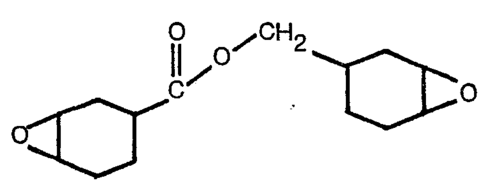

(3,4-époxycyclohexanecarboxylate de 3,4-époxycyclohexylméthyle),

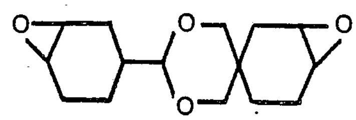

(3-(3,4-époxycyclohexane)-8,9-époxy-2,4-dioxaspiro[5,5]-undécane),

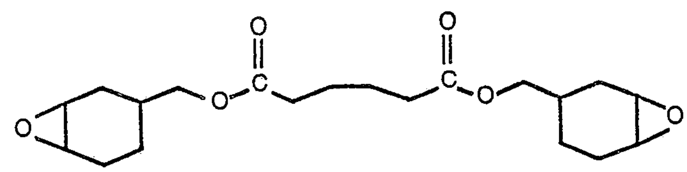

(adipate de bis(3,4-époxycyclohexylméthyle)),

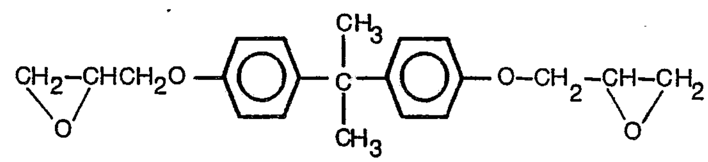

,

ou

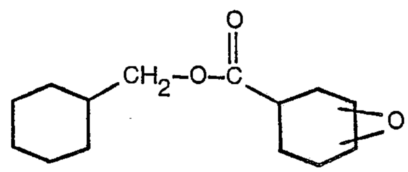

5. Composition suivant l'une quelconque des revendications 1 à 3, dans laquelle le composé époxy consiste en tétratallate de pentaérythritol époxydé, en huile de soja époxydée, en époxytallate d'octyle ou en huile de lin époxydée.

6. Composition suivant l'une quelconque des revendications précédentes, contenant une quantité épaississante d'un agent épaississant chimiquement actif, de préférence l'oxyde de magnésium.

7. Composition suivant l'une quelconque des revendications précédentes, dans laquelle l'additif bas profil est un acétate de polyvinyle, de préférence un acétate de polyvinyle carboxylé.

8. Composition suivant l'une quelconque des revendications précédentes, contenant une charge de renforcement, de préférence de la fibre de verre.

9. Composition suivant l'une quelconque des revendications précédentes, contenant un caoutchouc ou un élastomère.

10. Article moulé produit à partir de la composition suivant les revendications 1 à 9.